(19) Europäisches Patentamt

European Patent Office

Office européen des brevets

(11) **EP 1 702 689 A1**

(12) **EUROPEAN PATENT APPLICATION**
published in accordance with Art. 158(3) EPC

(43) Date of publication:
**20.09.2006 Bulletin 2006/38**

(51) Int Cl.:
**B05D 5/06** (2006.01)   **B05D 7/24** (2006.01)
**C09D 175/04** (2006.01)

(21) Application number: **04818171.3**

(22) Date of filing: **20.10.2004**

(86) International application number:
**PCT/JP2004/015529**

(87) International publication number:
**WO 2005/044471 (19.05.2005 Gazette 2005/20)**

(84) Designated Contracting States:
**DE FR GB**

(30) Priority: **11.11.2003 JP 2003381233**

(71) Applicants:
- **NICCA CHEMICAL CO., LTD.**
  **Fukui-shi,**
  **Fukui 910-8670 (JP)**
- **HONDA MOTOR CO., Ltd.**
  **Tokyo 107-8556 (JP)**

(72) Inventors:
- **SAITO, Toru,**
  **c/o NICCA CHEMICAL CO., LTD.**
  **Fukui-shi, Fukui 9108670 (JP)**

- **TOCHIKAWA, Hirofumi,**
  **c/o NICCA CHEMICAL CO., LTD.**
  **Fukui-shi, Fukui 9108670 (JP)**
- **MAKINO, Masahiro,**
  **c/o NICCA CHEMICAL CO., LTD.**
  **Fukui-shi, Fukui 9108670 (JP)**
- **TOJO, Hideaki,**
  **c/o HONDA MOTOR CO., LTD.**
  **Tokyo 1078556 (JP)**

(74) Representative: **Hayes, Adrian Chetwynd**
**Boult Wade Tennant,**
**Verulam Gardens**
**70 Gray's Inn Road**
**London WC1X 8BT (GB)**

(54) **METHOD OF LUSTERING SOLID SURFACE AND COATING LIQUID FOR COATING FILM FORMATION**

(57)    The method for glossing solid surface by forming a film thereon has the steps of: preparing a film-forming coating liquid containing at least an isocyanate compound having two or more isocyanate groups, a synthetic resin having a functional group which reacts with the isocyanate group, and an organic solvent; coating the film-forming coating liquid onto the solid surface; and film-forming on the solid surface after the step of coating.

The coating weight of the film-forming coating liquid is adjusted in the step of coating so as the film thickness after the step of film-forming to become a range from 0.1 to 5 $\mu$m.

EP 1 702 689 A1

## Description

## Technical Field

The present invention relates to a method for glossing solid surface and a film-forming coating liquid.

## Background Art

Surface of coating on, for example, automobile generates fine and large number of flaws caused by attached contaminants occurring in nature (dust, particulates, carbon-, animal-, and plant-contaminants, brake dust, iron particles and the like). Furthermore, when these contaminants are strongly adhered to the automobile coating, the coating may be chemically decomposed by acid rain, sun's ray, oxygen and the like. When the coating is damaged by these flaws and chemical decomposition, the gloss on coating significantly degrades. Furthermore, the contaminants may be accumulated.

Owners of automobiles conventionally apply automobile-wax to sustain the beautiful appearance of coating on their automobiles, giving gloss to the coating, and protecting appearance thereof, (protecting by a film). Generally, automobile-wax contains natural or synthetic waxes, oils and fats, silicone and the like. Gloss of coating is recovered by filling flaws generated on the surface of coating with ingredients of these waxes, (for example, see Non-patent document 1.)

In order to recover gloss on coating and to sustain the gloss over a long period, a method, for example, is disclosed. It has three steps of: removing foreign materials such as dust by cleaning the coating; removing the degraded portions by polishing the coating with buff or the like; and improving gloss using a surface-protection and glossing agent, (for example, see Patent document 1.)

There are disclosed gloss-recovery agents aiming at gloss-recovery with simpler work, which are photo-curing coating agents. They are prepared by dispersing and emulsifying a photo-curing resin as the filming agent and an organosiloxane oil in water, (for example, see Patent document 2.) That type of photo-curing coating gloss-recovery agent forms a film to recover gloss by photo-curing reaction.

[Non-patent document 1] "Auto Chemical", edited by Japan Auto Chemical Industry Association, p. 165-180, 1991.
[Patent document 1] Japanese Patent Laid-Open No. 9-187725
[Patent document 2] Japanese Patent Laid-Open No. 9-137128

## Disclosure of the Invention

Problems to be Solved by the Invention

The method using automobile-wax, however, cannot sustain gloss over a long period, because the wax dissolves over time. Furthermore, the surface of coating formed by applying automobile-wax thereon has problems that lipophilic contaminants can attach thereto and that raindrops left on the coating function as lenses owing to the repellency of wax to induce damages on the coating and to degrade the coating. Consequently, by ordinary maintenance of coating with automobile-wax, sustaining the beautiful appearance and its protection over a long period is difficult.

On the other hand, the gloss-recovery method according to Patent document 1 contains a step of physical polishing treatment so that there is a problem requiring time and labor. That is, the above step for removing the degraded portion by polishing the coating with buff and the like resembles the physical polishing treatment on the surface of automobile coating in an automobile repair shop and the like using a polishing machine or the like by skilled workers. Accordingly, the final smoothness of the coating surface largely depends on the polishing time and on the skill of the workers. For instance, the polishing treatment of entire surface of a single used car normally takes about four hours, but the mirror-polishing to recover the brightness of a new car over the whole coating surface requires additional several hours.

When the applied silicone acrylic-base photo-curing resin is cured by natural sun light, according to the method using a photo-curing type coating gloss-recovery agent, as disclosed in Patent document 2, it takes a long time until the curing of applied coating liquid completes, so the flaws can occur during a period of insufficient strength of the formed film. Therefore, the above method using a photo-curing type coating gloss-recovery agent requires a special apparatus having a specific light source to conduct rapid photo-curing, and it is difficult to attain excellent gloss-recovery effect by simple work.

The present invention has been developed to solve the above problems in the related art, and an object of the present invention is to provide a method for glossing solid surface and a film-forming coating liquid, which gives gloss to a solid surface (particularly the surface of coating of coated article or the surface of resin molding, and further the surface of automobile coating) with simple work without using physical polishing treatment and any special apparatus, and which provides excellent durability to sustain the attained gloss over a long period.

Means for Solving the Problems

The inventors of the present invention conducted detailed studies to solve the above problems, and found that gloss is attained on the solid surface (particularly the surface of coating of coated article or the surface of resin molding, and further the surface of automobile coating), and the attained gloss sustains over a long period by forming a film having a specified thickness on the solid surface, (particularly the surface of coating of coated article or the surface of resin molding, and further the surface of automobile coating), using a film-forming coating liquid containing a specified resin, a specified isocyanate compound, and an organic solvent, then developed the present invention.

The method for glossing solid surface according to the present invention is a method for glossing solid surface by forming a film thereon. The method contains the steps of: preparing a film-forming coating liquid containing at least an isocyanate compound having two or more isocyanate groups, a synthetic resin having a functional group which reacts with the isocyanate group, and an organic solvent; coating the film-forming coating liquid onto the solid surface; and film-forming on the solid surface after the step of coating;
wherein the coating weight of the film-forming coating liquid being adjusted in the step of coating so as the film thickness after the step of film-forming to become a range from 0.1 to 5 $\mu$m.

The term "solid surface" referred to herein designates an article being glossed. Examples of the solid surface are the coating surface of a coated article and the surface of resin molding. The coated article includes automobiles, bumpers of an automobile, door mirror covers of an automobile, motor bicycles, train cars, airplanes, furniture, household things, which have coating on the base material made of metal, synthetic resin, or wood. The resin molding includes the one colored by pigment or the like. The solid surface as a test subject according to the present invention may be in a stage of lost-gloss or in a fresh product state. That is, when the method for glossing solid surface according to the present invention is applied to a solid surface after losing the gloss, the gloss brighter than the lost-gloss state is attained by giving gloss to the surface. When the method is applied to a solid surface in the fresh product state, the gloss is further enhanced and the degradation of the initial gloss obtained after glossing is prevented over a long period.

The synthetic resin which is contained in the film-forming coating liquid and has a functional group reacting with a isocyanate group is used as a major component. The isocyanate compound which has two or more isocyanate groups and is contained in the film-forming coating liquid is used as a curing agent. The film-forming coating liquid applied onto the solid surface forms films by the curing thereof through the reaction of, functional groups reacting with the isocyanate group contained in the synthetic resin, and the isocyanate compound.

According to the present invention, the coating weight of the film-forming coating liquid is adjusted in the step of coating so as the thickness of film after the step of film-forming to become a range from 0.1 to 5 $\mu$m.

The film thickness T ($\mu$m) after the step of film-forming is expressed by the value determined by the formula (1), using the coating weight W1 (g) of the film-forming coating liquid, the nonvolatile material F 1 (%) therein, the density D 1 (g/cm$^3$) thereof, and the applied area A 1 (m$^2$):

$$T = (W1 \times F1)/(A1 \times D1 \times 100) \quad (1),$$

where the nonvolatile material F1 (%) in the film-forming coating liquid is the value determined by [Weight after dried W3 (g) / Weight before drying W2 (g)] x 100, for the case of drying the film-forming coating liquid at 105 °C for three hours.

According to the present invention, the step for coating includes the adjustment of coating weight of the film-forming coating liquid so as the thickness T of the film determined by the formula (1) to satisfy the formula (2):

$$0.1 \ \mu m \leq T \leq 5 \ \mu m \quad (2)$$

The present invention does not limit specifically the method for adjusting the coating weight of film-forming coating liquid. The coating weight may be determined to obtain the above film thickness considering, for example, the concentration of the organic solvent in the film-forming coating liquid, the density thereof, and the area of coating thereof.

The reason to specify the film thickness is the following. Fine flaws with 1 $\mu$m or thinner depth cause for the most part to whiten the appearance of coating of coated articles (particularly the automobile coating) and of resin molding, and to blur the surface thereof, thus to lose the gloss of surface thereof. Therefore, if each film having its thickness from 0.1 to 5 $\mu$m is formed, the whitening and the blurring vanish, and the gloss is attained, thus the original gloss is recovered, or even better gloss than the original state is attained. If the film thickness is thinner than 0.1 $\mu$m, sufficient gloss is

difficult to be attained. In order to form a film, whose thickness exceeds 5 μm, the concentration of film-forming coating liquid has to be increased, or other means has to be given. If the concentration of the film-forming coating liquid is increased, the viscosity thereof increases. But, the increased viscosity may generate unevenness of coloring or other problems and worsen the workability. Furthermore, the appearance can become worse, because the induced viscosity can vary the original gloss of solid surface. In addition, the followability of the film-forming coating liquid to solid surface becomes poor to degrade the adhesiveness (cohesiveness) of the film.

With the above construction, the method for glossing solid surface according to the present invention, forms a film, which gives gloss to the solid surface (particularly the surface of coating of coated article or of resin molding, further the surface of automobile coating) and which has excellent durability to sustain the obtained gloss over a long period, with simple work.

From the viewpoint to attain readily and surely the effect of the present invention, the isocyanate compound of the present invention is preferably an isocyanurate polyisocyanate compound. Examples of the isocyanurate polyisocyanate compound are isocyanurate-modified hexamethylenediisocyanate and isocyanurate-modified tolylenediisocyanate and hexamethylenediisocyanate. Using such isocyanurate-modified compounds as an isocyanate compound, the hardness of the formed film can be adjusted easily and surely to a preferable range described later. Furthermore, the chemical resistance of the film is further improved, (in particular, the resistivity against engine oil, gasoline and the like).

The isocyanate compound may be a block-type isocyanate compound which is prepared by blocking the isocyanate group by a blocking agent. When a block-type isocyanate compound is used as the isocyanate compound, the pot life of the film-forming coating liquid increases so that the film-forming coating liquid can be stored in stable state for a long period.

As the synthetic resin preferably, at least one resin selected from the group consisting of an acrylic-base resin, a polyester-base resin, an alkyd-base resin, and a polyurethane-base resin is used. Using these resins allows the effect of the present invention to be obtained easily and surely.

In the step of film-forming, the film is formed preferably under a condition of temperatures between 10 °C and 60 °C within 3 hours. If the film-forming completes under the condition, the effect of the present invention is attained easily and surely. If the curing time of the applied film-forming coating liquid is too short, the step of coating may be influenced. Accordingly, the lower limit of the curing time is preferably determined taking into account of the workability or the like in the step of coating. For example, the film is preferably formed under the above temperature condition within a period from 10 minutes to 3 hours.

The time until the film is formed in the step of film-forming according to the present invention is expressed by the time lapse, since the application of the film-forming coating liquid film is formed at a specified temperature, to both the hardness and the adhesiveness (cohesiveness) of the film reach the equivalent level to the ultimately reaching evaluation value. The hardness of the film is represented by the value according to the evaluation based on hand-scratch method, (evaluated by flaws), specified in Section 8.4.2 of JIS K5400. The adhesiveness (cohesiveness) is represented by the value according to the evaluation based on Section 8.5.2 of JIS K5400, "cross cut adhesion test method", (the evaluation is given by the total number of meshes generating no peeling detected among 100 meshes which generated flaws, whose meshes are formed in grid pattern on the coating face at 1 mm spacing. In concrete terms, for example, for the case that the hardness of the coating obtained ultimately is HB, and that the adhesiveness (cohesiveness) of the coating is evaluated to 100, the applied film-forming coating liquid is held at a specific temperature, for example, a temperature within the above temperatures range from 10 °C to 60 °C. When the hardness and the adhesiveness (cohesiveness) of the film being formed are evaluated over time, the time until the evaluation of film hardness of HB and of adhesiveness (cohesiveness) of 100 is attained is defined as the time until the film is formed in the step of film-forming.

According to the present invention, the film hardness is preferably at a level between B and 2H as the pencil hardness evaluated (evaluated by flaws) on the basis of the hand-scratch method specified in Section 8.4.2 of JIS K5400, and particularly between HB and F. For the case that the method for glossing the solid surface according to the present invention is applied to, for example, the coating on an automobile, ordinary hardness of the automobile coating is around F so that 2B or lower hardness of the film being formed may degrade the adhesiveness (cohesiveness) because of large difference in the hardness between the automobile coating and the formed film. Furthermore, soft film tends to induce easily generation of flaws. Even when the hardness of film is 3H or harder, the adhesiveness (cohesiveness) tends to degrade owing to the large difference in hardness between the automobile coating and the film being formed, thus when the coating having around F of surface hardness, as in the case of the automobile coating, is the target for glossing, the film preferably has the hardness of the above range, which provides readily and surely the effect of the present invention.

In the step of coating, the means to apply the film-forming coating liquid on the solid surface may use any of cloth, brush, roller, and spray. Using such kind of means allows the simplicity of work to attain readily and surely. The above means may be used in combination thereof.

The present invention provides a film-forming coating liquid which is applied on the solid surface and forms the film, in order to gloss the surface. The film-forming coating liquid contains a curing agent containing an isocyanate compound having two or more isocyanate groups, a major component containing a synthetic resin having a functional group which reacts with the isocyanate group, and an organic solvent.

That type of film-forming coating liquid can be applied onto the solid surface with simple work. The film-forming coating liquid applied onto the solid surface forms a film by the curing through the reaction of isocyanate compound with the functional group reacting with isocyanate group, whose functional group exists in the synthetic resin. Thus formed film gives gloss to the solid surface (particularly the surface of coating of coated article or of resin molding, further the surface of automobile coating), and sustains the obtained gloss over a long period.

In particular, from the viewpoint for attaining much easily and surely the effect of the present invention, the film-forming coating liquid is preferably applied onto the solid surface to form the film having thickness in a range from 0.1 to 5 $\mu$m.

The isocyanate compound is preferably an isocyanurate polyisocyanate compound. Examples of the isocyanurate polyisocyanate are an isocyanurate-modified hexamethylenediisocyanate and an isocyanurate-modified tolylenediisocyanate and hexamethylenediisocyanate.

The isocyanate compound may be a block-type isocyanate compound, in which the isocyanate group is blocked by a blocking agent.

The synthetic resin is preferably at least one resin selected from the group consisting of an acrylic-base resin, a polyester-base resin, an alkyd-base resin, and a polyurethane-base resin.

## Effect of the Invention

The present invention can provide a method for glossing solid surface and a coating liquid for film-forming, which gives gloss to a solid surface (particularly the surface of coating of coated article or the surface of resin molding, and further the surface of automobile coating) with simple work such as hand coating without using physical polishing treatment and any special apparatus, and which provide excellent durability to sustain the attained gloss over a long period.

## Best Mode for Carrying Out the Invention

A preferred mode for embodying the present invention is described in detail in the following.

The method for glossing solid surface according to the present invention contains the steps of: preparing a film-forming coating liquid; coating the film-forming coating liquid prepared in the step of preparation thereof onto the solid surface; and film-forming on the solid surface after the step of coating.

In the step of preparing the film-forming coating liquid, a synthetic resin having a functional group which reacts with isocyanate group is added to an organic solvent and then the mixture is stirred for homogenization. Afterwards, an isocyanate compound having two or more isocyanate groups is further added to the mixture and then the mixture is stirred for homogenization so that the film-forming coating liquid is prepared. The present invention, however, does not limit the preparation method to the above one, and other known means to prepare coating liquid may be used, if only the mixture contains at least an isocyanate compound having two or more isocyanate groups, a synthetic resin having a functional group which reacts with isocyanate group, and an organic solvent, and if only the film-forming coating liquid can be attained by mixing it homogeneously.

Examples of the synthetic resin having a functional group which reacts with isocyanate group and being included in the film-forming coating liquid are an acrylic-base resin, a polyester-base resin, an alkyd-base resin, and a polyurethane-base resin, which have functional group reacting with isocyanate group, such as hydroxyl-, amino-, imino-, carboxyl- and methylolamide-group.

The quantity of the above functional group contained in the synthetic resin is not specifically limited. For the case of acrylic-base resin, for example, the quantity of hydroxyl group (-OH) may be 1 to 10% by mass, as an average, in the resin. For the case of polyester-base resin, for example, the quantity of hydroxyl group (-OH) may be 0.5 to 10% by mass, as an average, in the resin. The content of the above hydroxyl group may be determined by adding excess acetic anhydride to the resin to execute acetylation reaction, and by neutralizing the surplus acetic anhydride using an alkali, (KOH), to determine the consumed quantity of acetic anhydride, with which the amount of hydroxyl group can be calculated.

The average molecular weight of the synthetic resin according to the present invention is also not limited specifically as far as the range thereof attains the effect of the present invention. For the case of acrylic-base resins, for example, those having the number-average molecular weights from ten thousands to several hundred thousands are used preferably. For the case of polyester-base resins, for example, those having the number-average molecular weights from ten thousands to several hundred thousands are used preferably.

The above synthetic resins according to the present invention may be used separately or in combination with two or more thereof.

The isocyanate compound having two or more isocyanate groups includes a diisocyanate compound and a polyisocyanate compound. Examples of the diisocyanate compound are: aromatic diisocyanate such as tolylenediisocyanate, xylylenediisocyanate, 4,4'-diphenylmethanediisocyanate, 2,4'-diphenylmethanediisocyanate, and 2,2'-diphenylmethanediisocyanate; aliphatic diisocyanate such as tetramethylenediisocyanate, pentamethylenediisocyanate, hexamethylenediisocyanate, trimethylhexamethylenediisocyanate, and lysinediisocyanate; and alicyclic diisocyanate such as isophoronediisocyanate, hydrogenated xylylenediisocyanate, and 4,4'-dicyclohexylmethanediisocyanate.

An example of the polyisocyanate compound is an adduct-type polyisocyanate compound which is prepared by the reaction between any of the above diisocyanate compound and a two or higher functional polyol such as ethyleneglycol, polyethyleneglycol, polypropyleneglycol, polyetherpolyol, polyesterpolyol, polycarbonatepolyol, trimethylol propane, hexanediol, and pentaerythritol. Other examples thereof are an isocyanurate polyisocyanate compound, an urethodione-type polyisocyanate compound, and an arophanate-type polyisocyanate compound, which are prepared by polymerizing any of the above diisocyanate compounds. Among these polyisocyanate compounds, the present invention uses preferably an isocyanurate polyisocyanate compound, because that type of compound improves the formability of film and the adhesiveness (cohesiveness) thereof. Specific examples of the isocyanurate polyisocyanate compound are an isocyanurate-modified hexamethylenediisocyanate, an isocyanurate-modified tolylenediisocyanate and hexamethylenediisocyanate.

The content of isocyanate group existing in the isocyanate compound is not specifically limited. However, it is preferable that the isocyanate group (NCO group) in the isocyanate compound exists from 10 to 50% by mass as an average. The content of isocyanate group can be determined by adding excess amine to the isocyanate compound to execute the urea reaction, and by neutralizing surplus amine by an acid (hydrochloric acid) to determine the consumed quantity of amine, with which the amount of isocyanate group can be calculated.

According to the present invention, the isocyanate compound may be a block-type isocyanate compound which is prepared by blocking the isocyanate group by a blocking agent. Applicable blocking agents include sodium hydrogen sulfite. When a block-type isocyanate compound is used as the isocyanate compound, the pot life of the film-forming coating liquid increases so that the film-forming coating liquid can be stored in stable state for a long period.

The above isocyanate compounds and block-type isocyanate compounds may be used separately as a single compound or in combination with two or more thereof.

Regarding the mixing ratio of the synthetic resin having a functional group which reacts with isocyanate group to the isocyanate compound having two or more isocyanate groups in the film-forming coating liquid, it is preferable that the equivalent ratio of the functional group which reacts with the isocyanate group to the isocyanate group is adjusted to a range from 1:0.8 to 1:1.6, more preferably from 1:0.9 to 1:1.4, from the viewpoint of film-formability and of film adhesiveness (cohesiveness).

The combination of the synthetic resin having a functional group which reacts with isocyanate group and the isocyanate compound having two or more isocyanate groups may be arbitrarily determined taking into account of their chemical reactivity. For example, the synthetic resin having a functional group which reacts with isocyanate group may be a combination of a polyisocyanate compound as the isocyanate compound having two or more isocyanate groups and at least one resin selected from the group consisting of an acrylic-base resin, a polyester-base resin, an alkyd-base resin, and a polyurethane-base resin. In particular, a combination using a polyisocyanate compound and an acrylic-base resin is preferable to attain easily and surely a film having excellent adhesiveness (cohesiveness) to the coating of automobiles and the like and having excellent glossing performance.

The kind of organic solvent existing in the film-forming coating liquid is not limited specifically. It is, however, preferable that the selection is given considering the drying property of applied film formed by applying the film-forming coating liquid and the chemical reactivity between the synthetic resin having a functional group reacting with the isocyanate group and the isocyanate compound having two or more isocyanate groups. Examples of the organic solvent are: ketones such as acetone, methylethylketone, and methybutylketone; aromatic organic solvents such as benzene, xylene, and toluene; glycolethers having no hydroxyl group, such as ethyl acetate, butyl acetate, propyleneglycol monomethylether acetate, ethyleneglycol monobutylether acetate, diethyleneglycol monoethylether acetate, diethyleneglycol dimethylether, and diethyleneglycol diethylether. Since the above organic solvents have no hydroxyl group, they are preferably applied as the organic solvents mixed in the film-forming coating liquid which, for example, contains an acrylic-base resin having hydroxyl group and a polyisocyanate compound. The above organic solvents may be used separately or in combination with two or more thereof. A preferable range of mixing ratio of the organic solvent in the film-forming coating liquid is from 60 to 95% by mass, more preferably from 80 to 93% by mass, from the viewpoint of film-formability and workability.

The film-forming coating liquid according to the present invention may further contain, at need, generally-used additives including: cross-linking agent such as a silane-coupling agent, an oxazoline compound, and an ethylene imine compound; surface active agent such as a nonionic, an anionic, a cationic and an amphoteric surfactant; wetting-improving agent such as a polyether-modified dimethylsilicone and an acetylene oxide compound; catalyst; reaction inhibitor for controlling reaction; antioxidant; UV absorbent; antiseptic; antimildew agent; dispersant; plasticizer; and perfume.

The following explains the step of coating in which the film-forming coating liquid prepared in the above step of preparation thereof is applied onto the solid surface. During the step of coating, the above film-forming coating liquid is applied onto the solid surface. For the case of automobiles as the article giving gloss thereto, for example, the film-forming coating liquid is applied onto the surface of coating of cars and to the surface of bumpers thereof. On applying the film-forming coating liquid, it is necessary to adjust the coating weight of the film-forming coating liquid so as the thickness of film formed during the step of film-forming (described later) to become a range from 0.1 to 5 $\mu$m. According to the present invention, the film thickness is preferably in a range from 0.5 to 2 $\mu$m.

The reason to specify the film thickness is the following. Fine flaws with 1 $\mu$m or thinner depth cause for the most part to whiten the appearance of coating of coated articles (particularly the automobile coating) and of resin molding, and blurring on the surface thereof, thus to lose the gloss of surface thereof. Therefore, if each film having thickness from 0.1 to 5 $\mu$m is formed, the whitening and the blurring vanish, and the gloss is attained, thus the original gloss is recovered, or even better gloss than the original state is attained. If the film thickness is thinner than 0.1 $\mu$m, it is difficult to attain the sufficient gloss. If it is necessary to form a film with thickness over 5 $\mu$m, the concentration of film-forming coating liquid has to be increased, or other means has to be given, to form such a thick film. If the concentration of the film-forming coating liquid is increased, the viscosity thereof increases and the increased viscosity can generate unevenness of coloring or other problems to degrade the workability. Furthermore, the appearance becomes worse, because the original gloss on the solid surface is changed. In addition, the followability of the film-forming coating liquid to the solid surface becomes poor and worse the adhesiveness (cohesiveness) of the film.

The film thickness T ($\mu$m) after the step of film-forming is expressed by the value determined by the formula (1), with the coating weight W1 (g) of the film-forming coating liquid, the nonvolatile material F1 (%) in the film-forming coating liquid, the density D1 (g/cm$^3$) of the film-forming coating liquid, and the applied area A1 (m$^2$):

$$T = (W1 \times F1)/(A1 \times D1 \times 100) \quad (1),$$

where the nonvolatile material F1 (%) in the film-forming coating liquid is the value determined by [Weight after drying W3 (g) / Weight before drying 2 (g)] x 100, for the case of drying the film-forming coating liquid at 105°C for 3 hours.

According to the present invention, the step for coating includes the adjustment of coating weight of the film-forming coating liquid so as the film thickness T determined by the formula (1) to satisfy the formula (2):

$$0.1 \ \mu m \leq T \leq 5 \ \mu m \quad (2)$$

The adjustment of coating amount of the film-forming coating liquid may be done, for example, by applying the film-forming coating liquid onto the solid surface using cloth or the like, and the amount is determined by the concentration of the film-forming coating liquid and the application area. Alternatively, the means to apply the film-forming coating liquid may be, other than cloth, any of brush, roller, and spray. The number of applications is also not specifically limited to one or more, if only the thickness of formed film becomes a range from 0.1 to 5 $\mu$m.

The description given below is about the step of film-forming, in which a film is formed on the solid surface after the step of coating. During the step of film-forming, the film is formed by natural-drying of the film-forming coating liquid under a condition of temperatures between 10 °C and 60 °C. Although the present invention does not limit specifically the film-forming condition such as temperature, natural-drying in the above temperature range is preferred, because no special apparatus is required. A more preferable temperature condition for the natural-drying is in a range from 10 °C to 50 °C, and most preferably from 10°C to 30°C for allowing film-forming under normal weather condition. The humidity is preferably 90% RH or less. If the humidity exceeds 90% RH, the reaction of isocyanate is hindered by moisture, which may degrade the adhesiveness (cohesiveness) of the film.

When a block-type isocyanate compound, in which the isocyanate group is blocked by a blocking agent, is used as the isocyanate compound having two or more isocyanate groups, it is preferable that, in the step of film-forming, the condition of temperatures between 40°C and 60°C is held initially for about 30 minutes to detach the blocking agent from the isocyanate group, thus to obtain the isocyanate group, and then the natural-drying is executed under the above condition.

The time between the point of applying the film-forming coating liquid and the point of forming the film in the step of film-forming depends on the temperature, the composition of the applied film-forming coating liquid, and the like. It is, however, preferable that the film is formed within 3 hours. The time until the film is formed in the step of film-forming according to the present invention is expressed by the time between the time point of applying the film-forming coating liquid to hold the liquid at a specified temperature and the time point that both the hardness and the adhesiveness (cohesiveness) of the film being formed reach an equivalent level with the ultimately reaching evaluation value, respectively. The hardness of the film is represented by the value of evaluation on the basis of hand-scratch method, (evaluated by flaws), specified in Section 8.4.2 of JIS K5400. The adhesiveness (cohesiveness) is represented by the value of evaluation based on Section 8.5.2 of JIS K5400, "cross cut adhesion test method", (the evaluation is given by the total number of meshes generating no peeling detected among 100 meshes which generated flaws, whose meshes are formed in grid pattern on the coating face at 1 mm spacing.)

Once the step of film-forming completes, a film having sufficient hardness and adhesiveness (cohesiveness) is formed on the solid surface, and gloss is given to the solid surface. Although the hardness of formed film depends on the composition of applied film-forming coating liquid, the hardness of formed film according to the present invention is preferably at a level between B and 2H as the pencil hardness evaluated (evaluated by flaws) on the basis of the hand-scratch method specified in Section 8.4.2 of JIS K5400, and particularly between HB and F. For example, when a film on the solid surface of an automobile is formed by coating, the hardness of ordinary coating of the automobile becomes around F. When the thus formed film has 2B or lower hardness, there appears large difference in the hardness between the automobile coating and the formed film, which can degrade the adhesiveness (cohesiveness), and when the film is soft, flaws are easily generated. Even when the hardness of film is 3H or harder, the adhesiveness (cohesiveness) tends to degrade owing to the large difference in hardness between the automobile coating and the formed film. Accordingly, when the coating having around F of surface hardness, as the automobile coating, is the target article, the film preferably has the hardness of the above range.

The film-forming coating liquid according to the present invention is used to give gloss to the solid surface, as described above, and is applied onto the solid surface to form a film. The film-forming coating liquid contains a curing agent containing an isocyanate compound having two or more isocyanate groups, a major component containing a synthetic resin having a functional group which reacts with the isocyanate group, and an organic solvent.

Regarding the synthetic resins having a functional group reacting with the isocyanate group, the above synthetic resins may be used separately or in combination with two or more thereof. Also for the isocyanate compounds having two or more isocyanate groups, the above isocyanate compounds may be used separately or in combination with two or more thereof. For the organic solvents, also the above organic solvents may be used.

Using the above block-type isocyanate compounds as the isocyanate compounds improves the shelf-life of the film-forming coating liquid and the handling easiness.

Regarding the mixing ratio of the major component to the curing agent, it is preferable that the equivalent ratio of the functional group which reacts with the isocyanate group to the isocyanate group is adjusted to a range from 1:0.8 to 1:1.6, more preferably from 1:0.9 to 1:1.4, from the viewpoint of film-formability and film adhesiveness (cohesiveness).

The mixing amount of the organic solvent in the film-forming coating liquid is preferably in a range from 60 to 95% by mass, more preferably from 80 to 93% by mass, from the viewpoint of film-formability and workability.

The film-forming coating liquid according to the present invention may further contain, at need, generally-used additives including: cross-linking agent such as a silane-coupling agent, an oxazoline compound, and an ethylene imine compound; surface active agent such as a nonionic, an anionic, a cationic , and an amphoteric surfactant; wetting-improving agent such as a polyether-modified dimethylsilicone and an acetylene oxide compound; catalyst; reaction inhibitor for controlling reaction; antioxidant; UV absorbent; antiseptic; antimildew agent; dispersant; plasticizer; and perfume.

Examples

The present invention is described in more detail in the following referring to the examples. However, the present invention is not limited by these examples.

The evaluation methods applied in the examples are described below:

(1) Evaluation on a passenger car

A coating on a passenger car (driving mileage of 20,000 km, trade name "Life", manufactured by Honda Motor Co., Ltd.) was selected as the test subject to be glossed. The coating had a pencil hardness of F (the evaluation was given to the flaws generated by the hand-scratch method per Section 8.4.2 of JIS K5400). The coating face of the test subject was cleaned by a commercially available cleaner (trade name "Sunrex K", manufactured by Nicca Chemical Co., Ltd.), and was dried. With the respective film-forming coating liquids prepared in Examples and Comparative Examples, the glossing treatment was conducted onto the coating face conforming to the respective methods described in Examples and Comparative Examples. The following evaluation of "1. Gloss" was given to the coating face before and after glossing, and after running test for 6 months. The following evaluation of "2. Coating appearance" was given to the coating face after glossing and after running test for 6 months. The evaluation results are given in Tables 1 and 2.

1. Gloss

The gloss grade (with 60° of measurement angle) on the coating face was determined using a gloss checker ("IG-320", manufactured by Horiba, Ltd.)

2. Coating appearance

The appearance of coating face was visually determined applying the following criterion:

1: Gloss is good, giving a thick feeling.
2: Gloss is rather weak, giving somewhat lean coating face appearance.
3: Gloss is poor, giving a feeling of thin coating face.

(2) Evaluation on coated plate

On a cationic electrodeposition-coated plate for testing, (SPCC SD per JIS G3141, manufactured by Test Piece Co., Ltd.), an intermediate paint (trade name "HS60", manufactured by Kansai Paint Co., Ltd.) was applied by air spray to a dry-film thickness of 30 $\mu$m, which was then baked at 140 °C for 20 minutes. Afterwards, a blue-pearl top coat basecoat paint (trade name "Magicron HM32-1, Color No. B-96P", manufactured by Kansai Paint Co., Ltd.) was applied by air spray to a dry film thickness of 20 $\mu$m, which was then baked at 140 °C for 20 minutes. Furthermore, a blue-pearl top coat topcoat paint (trade name "LUG-BAKE HK-4 Clear", manufactured by Kansai Paint Co., Ltd.) was applied by air spray to a dry film thickness of 30 $\mu$m, which was then baked at 140 °C for 20 minutes, thus obtaining the coated plate. The pencil hardness of the coating of the coated plate was F (evaluated by flaws based on the hand-scratch method specified by Section 8.4.2 of JIS K5400). Thus prepared coated plate formed a uniform and glossy coating. The coating was further treated by a coarse compound to generate fine flaws thereon, then by wiping out the compound component using n-hexane, followed by acetone, thus obtaining a coated plate giving 60 grade or less of gloss (60° of measurement angle). The coated plate obtained was used as the test subject for glossing. The coating face of the test subject was cleaned by a commercially available cleaner (trade name "Sunrex K", manufactured by Nicca Chemical Co., Ltd.) and was dried. To thus prepared coating face, the respective film-forming coating liquids prepared in Examples and Comparative Examples were applied to give glossing treatment in accordance with the respective methods of Examples and Comparative Examples. The following evaluation of "3. Gloss" was given to the coating face before and after glossing, and after anti-weathering treatment described below. The following evaluation of "4. Coating appearance", "5. Pencil hardness of coating", and "6. Adhesiveness (cohesiveness) of film" were given to the coating face after glossing and after anti-weathering treatment described below. The evaluation results are given in Tables 1 and 2.

[Anti-weathering treatment]

The treatment was executed by a weather testing machine ("Sunshine weather-o-meter WEL-300-DC", manufactured by Suga Test Instruments Co., Ltd.) for 500 hours. The treatment condition was 63 °C of black panel temperature and for 12 minutes of rainfall during a one-hour cycle.

3. Gloss

The gloss grade (60° of measurement angle) on the coating face was determined by a gloss checker ("IG-320", manufactured by Horiba, Ltd.)

4. Coating appearance

The appearance of coating face was visually determined applying the following criterion:

1: Gloss is good, giving a thick feeling.
2: Gloss is rather weak, giving somewhat lean coating face appearance.
3: Gloss is poor, giving a feeling of thin coating face.

5. Pencil hardness of film

The evaluation (evaluated by flaws) was given on the basis of the hand-scratch method specified by Section 8.4.2 of JIS K5400.

6. Adhesiveness (cohesiveness) of coating

The evaluation was given conforming to the "cross cut adhesion test method" specified in Section 8.5.2 of JIS K5400. The evaluation was given by the total number of meshes generating no peeling detected among 100 meshes which generated flaws, whose meshes are formed in grid pattern on the coating face at 1 mm spacing.

The applied-film thickness and the formed-film thickness given in Examples and Comparative Examples described later were determined by the following formula, for the case that a coated plate is adopted as the target article for glossing, using: the mass change [Mass after applying (g) - Mass before applying (g)]; the applied area; and the density of film-forming coating liquid. Also for the case of passenger car as the test subject being glossed, because the treatment was executed with same procedure as that for the coated plate, the applied-film thickness and the formed-film thickness were assumed as the same as those determined for the coated plate:

$$\text{Applied-film thickness } (\mu m) = [\text{Mass after applying (g)} - \text{Mass before applying (g)}]/[\text{Area } (m^2)]/[\text{Density of film-forming coating liquid } (g/cm^3)]$$

$$\text{Formed-film thickness } (\mu m) = [\text{Applied-film thickness } (\mu m)] \times [\text{Nonvolatile material in the film-forming coating liquid } (\%)] / 100$$

The mass of the nonvolatile material in the film-forming coating liquid was determined by the following formula with the values of mass (g) before drying of film-forming coating liquid and of mass (g) after drying thereof at 105 °C for 3 hours in a hot-air drier:

$$\text{Nonvolatile material } (\%) = [\text{Mass after drying (g)}]/[\text{Mass before drying (g)}] \times 100$$

(Example 1)

To 712 g of propyleneglycol monomethylether acetate, 223 g of an acrylic-base resin (the trade name "Desmophen A450", OH group content of 1.0% by mass, nonvolatile material of 50% by mass, manufactured by Sumika Bayer Urethane Co., Ltd.), was added. Afterwards, the mixture was stirred to prepare a homogeneous mixture. Furthermore, 65 g of an isocyanurate-modified tolylenediisocyanate and hexamethylenediisocyanate (trade name "Desmodule HL", NCO group content of 10.5% by mass, nonvolatile material of 60% by mass, manufactured by Sumika Bayer Urethane Co., Ltd.), were added to the mixture. Afterwards, the mixture was stirred to prepare a homogeneous mixture of the film-forming coating liquid. The nonvolatile material in thus prepared film-forming coating liquid was 15% by mass. The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by a single application, which were allowed standing for 3 hours at normal temperature (25 °C). The applied-film thickness of the film-forming coating liquid was 6.0 μm, and the formed film had a thickness of 0.90 μm.

(Example 2)

To 617 g of propyleneglycol monomethylether acetate, 297 g of an acrylic-base resin (trade name "Desmophen A450", OH group content of 1.0% by mass, nonvolatile material of 50% by mass, manufactured by Sumika Bayer Urethane Co., Ltd.), was added. Afterwards, the mixture was stirred to prepare a homogeneous mixture. Furthermore, 86 g of an isocyanurate-modified tolylenediisocyanate and hexamethylenediisocyanate (trade name "Desmodule HL", NCO group content of 10.5% by mass, nonvolatile material of 60% by mass, manufactured by Sumika Bayer Urethane Co., Ltd.), were added to the mixture. Afterwards, the mixture was stirred to prepare a homogeneous mixture of the film-forming coating liquid. The nonvolatile material in thus prepared film-forming coating liquid was 20% by mass.

The prepared film-forming coating liquid was impregnated into a brush, (brush length of 50 mm, manufactured by Kowa Co.,Ltd.) Using the impregnated brush, the film-forming coating liquid was applied onto the coating face on the automobile and the coating face of the coated plate as the test subject by a single coating one ply, which were then allowed standing for 3 hours at normal temperature (25 °C). The applied-film thickness of the film-forming coating liquid was 23.0$\mu$ m, and the formed film had a thickness of 4.80 $\mu$m.

(Example 3)

To 942 g of propyleneglycol monomethylether acetate, 45 g of an acrylic-base resin (trade name "Desmophen A450", OH group content of 1.0% by mass, nonvolatile material of 50% by mass, manufactured by Sumika Bayer Urethane Co., Ltd.), was added, and afterwards, the mixture was stirred to prepare a homogeneous mixture. Furthermore, 13 g of an isocyanurate-modified tolylenediisocyanate and hexamethylenediisocyanate (trade name "Desmodule HL", NCO group content of 10.5% by mass, nonvolatile material of 60% by mass, manufactured by Sumika Bayer Urethane Co., Ltd.), were added to the mixture, and afterwards, the mixture was stirred to prepare a homogeneous mixture of the film-forming coating liquid. The nonvolatile material in thus prepared film-forming coating liquid was 3% by mass.

The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by a single coating one ply, which were then allowed standing for 3 hours at normal temperature (25 °C). The applied-film thickness of the film-forming coating liquid was 5.0 $\mu$m, and the formed film had a thickness of 0.15 $\mu$m.

(Example 4)

To 800 g of propyleneglycol monomethylether acetate, 144 g of an acrylic-base resin (trade name A365", OH group content of 2.8% by mass, nonvolatile material of 65% by mass, manufactured by Sumika Bayer Urethane Co., Ltd.), was added, and afterwards, the mixture was stirred to prepare a homogeneous mixture. Furthermore, 56 g of an isocyanurate-modified hexamethylenediisocyanate (trade name "Sumijule N-3300", NCO group content of 21.5% by mass, nonvolatile material of 100% by mass, manufactured by Sumika Bayer Urethane Co., Ltd.), and 0.01 g of a undecene diazabicycloformate as the amine-base catalyst were added to the mixture, and afterwards, the mixture was stirred to prepare a homogeneous mixture of the film-forming coating liquid. The nonvolatile matter in thus prepared film-forming coating liquid was 15% by mass.

The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by a single coating one ply, which was were then allowed standing for 3 hours at 50 °C. The applied-film thickness of the film-forming coating liquid was 5.0 $\mu$m, and the formed film had a thickness of 0.75 $\mu$m.

(Example 5)

To 777 g of propyleneglycol monomethylether acetate, 181 g of an acrylic-base resin, (trade name "Desmophen A160", OH group content of 1.6% by mass, nonvolatile material of 60% by mass, manufactured by Sumika Bayer Urethane Co., Ltd.), was added, and afterwards, the mixture was stirred to prepare a homogeneous mixture. Furthermore, 42 g of an isocyanurate-modified hexamethylenediisocyanate (trade name "Sumijule N-3300", NCO group content of 21.5% by mass, nonvolatile material of 100% by mass, manufactured by Sumika Bayer Urethane Co., Ltd.), and 0.01 g of a undecene diazabicycloformate as the amine-base catalyst were added to the mixture, and afterwards, the mixture was stirred to prepare a homogeneous mixture of the film-forming coating liquid. The nonvolatile material in thus prepared film-forming coating liquid was 15% by mass.

The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by double coatings two ply. Afterwards, the mixture was then allowed standing for 3 hours at 50°C. The applied-film thickness of the film-forming coating liquid was 13.0 $\mu$m, and the formed film had a thickness of 1.95 $\mu$m.

(Example 6)

To 640 g of propyleneglycol monomethylether acetate, 300 g of a polyester-base resin (trade name "Espel 9940 E-37", OH group content of 0.3% by mass, nonvolatile material of 38% by mass, manufactured by Hitachi Chemical Co., Ltd.), was added. Afterwards, the mixture was stirred to prepare a homogeneous mixture. Furthermore, 60 g of an isocyanurate-modified tolylenediisocyanate and hexamethylenediisocyanate (trade name "Desmodule HL", NCO group content of 10.5% by mass, nonvolatile material of 60% by mass, manufactured by Sumika Bayer Urethane Co., Ltd.), were added to the mixture, and afterwards, the mixture was stirred to prepare a homogeneous mixture of the film-forming coating liquid. The nonvolatile material in thus prepared film-forming coating liquid was 15% by mass.
The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by a single coating one ply, which were was then allowed standing for 3 hours at normal temperature (25 °C). The applied-film thickness of the film-forming coating liquid was 5.0 $\mu$m, and the formed film had a thickness of 0.75 $\mu$m.

(Comparative Example 1)

A commercially available carnauba wax, (trade name "Impact Master Finish", manufactured by SurLuster K. K.), was applied onto the coating face of automobile and of coated plate as the test subject, using sponge, which were then dried and wiped to finish the surface thereof.

(Comparative Example 2)

To 712 g of propyleneglycol monomethylether acetate, 223 g of an acrylic-base resin (trade name "Desmophen A450", OH group content of 1.0% by mass, nonvolatile material of 50% by mass, manufactured by Sumika Bayer Urethane Co., Ltd.), was added. Afterwards, the mixture was stirred to prepare a homogeneous mixture. Furthermore, 65 g of an isocyanurate-modified tolylenediisocyanate and hexamethylenediisocyanate (trade name "Desmodule HL", NCO group content of 10.5% by mass, nonvolatile material of 60% by mass, manufactured by Sumika Bayer Urethane Co., Ltd.), were added to the mixture. Afterwards, the mixture was stirred to prepare a homogeneous mixture of the film-forming coating liquid. The nonvolatile material in thus prepared film-forming coating liquid was 15% by mass.
The prepared film-forming coating liquid was impregnated into a brush, (brush length of 50 mm, manufactured by Kowa Co,Ltd.) Using the impregnated brush, the film-forming coating liquid was applied onto the coating face on the automobile and the coating face of the coated plate as the test subject by double coatings two ply, which were allowed standing for 3 hours at normal temperature (25 °C). The applied-film thickness of the film-forming coating liquid was 39.0 $\mu$m, and the formed film had a thickness of 5.85 $\mu$m.

(Comparative Example 3)

To 961 g of propyleneglycol monomethylether acetate, 30 g of an acrylic-base resin (trade name "Desmophen A450", OH group content of 1.0% by mass, nonvolatile material of 50% by mass, manufactured by Sumika Bayer Urethane Co., Ltd.), was added. Afterwards, the mixture was stirred to prepare a homogeneous mixture. Furthermore, 9 g of an isocyanurate-modified tolylenediisocyanate and hexamethylenediisocyanate (trade name "Desmodule HL", NCO group content of 10.5% by mass, nonvolatile material of 60% by mass, manufactured by Sumika Bayer Urethane Co., Ltd.), were added to the mixture. Afterwards, the mixture was stirred to prepare a homogeneous mixture of the film-forming coating liquid. The nonvolatile material in thus prepared film-forming coating liquid was 2% by mass.
The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by a single coating one ply, which were then allowed standing for 3 hours at normal temperature (25 °C). The applied-film thickness of the film-forming coating liquid was 4.0 $\mu$m, and the formed film had a thickness of 0.08 $\mu$m.

(Comparative Example 4)

To 500 g of propyleneglycol monomethylether acetate, 500 g of a urethane-base resin, (trade name "Evaphanol D-5080", nonvolatile matter of 30% by mass, manufactured by Nicca Chemical Co., Ltd., was added. Afterwards, the mixture was stirred to prepare a homogeneous mixture of film-forming coating liquid. The nonvolatile material in thus prepared film-forming coating liquid was 15% by mass.
The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by a single coating one ply, which were then allowed standing for 3 hours at normal temperature (25 °C). The applied-film thickness of the film-forming coating liquid was 8.0 $\mu$m, and the formed film had a thickness of 1.2 $\mu$m.

(Comparative Example 5)

To 700 g of propyleneglycol monomethylether acetate, 300 g of an acrylic-base resin (trade name "Acrydic A-801-P", nonvolatile material of 50% by mass, manufactured by Dainippon Ink And Chemicals, Incorporated), was added. Afterwards, the mixture was stirred to prepare a homogeneous mixture of film-forming coating liquid. The nonvolatile material in thus prepared film-forming coating liquid was 15% by mass.

The prepared film-forming coating liquid was impregnated into a nonwoven fabric (trade name "Miracle Cloth", manufactured by Daiwabo Co, Ltd.). Using the impregnated nonwoven fabric, the film-forming coating liquid was applied onto the coating face on the automobile and the coating face of the coated plate as the test subject by a single coating one ply, which was then allowed standing for 3 hours at normal temperature (25 °C). The applied-film thickness of the film-forming coating liquid was 7.0 $\mu$m, and the formed film had a thickness of 1.05 $\mu$m.

[Table 1]

Table 1 (Part I)

|  | Example 1 | Example 2 | Example 3 | Example 4 | Example 5 | Example 6 |
|---|---|---|---|---|---|---|
|  | Acrylic-urethane polymer | Acrylic-urethane polymer | Acrylic-urethane polymer | Acrylic-urethane polymer | Acrylic-urethane polymer | Polyester-urethane polymer |
| Desmodule HL (g) | 65 | 86 | 13 | - | - | 60 |
| Sumidule N-3300 (g) | - | - | - | 56 | 42 | - |
| Desmophen A450 (g) | 223 | 297 | 45 | - | - | - |
| Desmophen A365 (g) | - |  | - | 144 | - | - |
| Desmophen A160 (g) | - | - |  | - | 181 | - |
| Espel 9940 E-37 (g) | - | - | - | - | - | 300 |
| Propyleneglycol monomethylether acetate (g) | 712 | 617 | 942 | 800 | 777 | 640 |
| Total (g) | 1000 | 1000 | 1000 | 1000 | 1000 | 1000 |

Table 1 (Part II)

|  | Comparative Example 1 | Comparative Example 2 | Comparative Example 3 | Comparative Example 4 | Comparative Example 5 |
|---|---|---|---|---|---|
|  | Wax | Acrylic-urethane polymer | Acrylic-urethane polymer | Urethane polymer | Acrylic polymer |
| Carnauba wax (g) | 1000 | - | - | - | - |
| Desmodule HL (g) | - | 65 | 9 | - | - |

(continued)

|  | Comparative Example 1 | Comparative Example 2 | Comparative Example 3 | Comparative Example 4 | Comparative Example 5 |
|---|---|---|---|---|---|
|  | Wax | Acrylic-urethane polymer | Acrylic-urethane polymer | Urethane polymer | Acrylic polymer |
| Desmophen A450 (g) | - | 223 | 30 | - | - |
| Evaphanol D-5080 (g) | - | - | - | 500 | - |
| Acrydic A-801-P (g) | - | - | - | - | 300 |
| Propyleneglycol monomethylether acetate (g) | - | 712 | 961 | 500 | 700 |
| Total (g) | 1000 | 1000 | 1000 | 1000 | 1000 |

Table 2]

Table 2 ( Part I )

| | | | | Example 1 | Example 2 | Example 3 | Example 4 | Example 5 | Example 6 |
|---|---|---|---|---|---|---|---|---|---|
| | | | | Acrylic-urethane polymer | Acrylic-urethane polymer | Acrylic-urethane polymer | Acrylic-urethane polymer | Acrylic-urethane polymer | Polyester-urethane polymer |
| Passenger car | Gloss | | Before glossing treatment | 81 | 80 | 82 | 81 | 79 | 81 |
| | | | After glossing treatment | 92 | 94 | 88 | 92 | 93 | 90 |
| | | | After running for 6 months | 91 | 92 | 87 | 90 | 90 | 88 |
| | Coating appearance | | After glossing treatment | 1 | 1 | 1 | 1 | 1 | 1 |
| | | | After running for 6 months | 1 | 1 | 1 | 1 | 1 | 1 |
| Coated plate | Applied-film thickness (µm) | | | 0.90 | 4.80 | 0.15 | 0.75 | 1.95 | 0.90 |
| | Gloss | | Before glossing treatment | 58 | 59 | 56 | 60 | 58 | 57 |
| | | | After glossing treatment | 85 | 88 | 84 | 84 | 86 | 82 |
| | | | After W-O-M 500 h | 83 | 87 | 82 | 81 | 84 | 80 |
| | Coating appearance | | After glossing treatment | 1 | 1 | 1 | 1 | 1 | 1 |
| | | | After W-O-M 500 h | 1 | 1 | 1 | 1 | 1 | 1 |
| | Pencil hardness | | After glossing treatment | HB | HB | HB | F | F | B |
| | | | After W-O-M 500 h | HB | HB | HB | F | F | B |
| | Adhesiveness | | After glossing treatment | 100 | 100 | 100 | 100 | 100 | 100 |
| | | | After W-O-W 500 h | 100 | 100 | 100 | 100 | 100 | 100 |

Note that the term "After W-O-M 500 h" designates "after 500 hours of treatment in a Sunshine Weathermeter."

## EP 1 702 689 A1

Table 2 ( Part II )

| | | | Comparative Example 1 | Comparative Example 2 | Comparative Example 3 | Comparative Example 4 | Comparative Example 5 |
|---|---|---|---|---|---|---|---|
| | | | Wax | Acrylic-urethane polymer | Acrylic-urethane polymer | Urethane polymer | Acrylic polymer |
| Passenger car | Gloss | Before glossing treatment | 79 | 80 | 82 | 81 | 82 |
| | | After glossing treatment | 98 | 77 | 83 | 75 | 76 |
| | | After running for 6 months | 78 | 76 | 82 | 74 | 76 |
| | Coating appearance | After glossing treatment | 1 | 2 | 2 | 2 | 2 |
| | | After running for 6 months | 3 | 3 | 3 | 3 | 3 |
| Coated plate | Applied-film thickness (µm) | | - | 5.85 | 0.08 | 1.20 | 1.05 |
| | Gloss | Before glossing treatment | 57 | 59 | 60 | 58 | 56 |
| | | After glossing treatment | 89 | 65 | 61 | 62 | 63 |
| | | After W-O-M 500 h | 59 | 64 | 60 | 57 | 58 |
| | Coating appearance | After glossing treatment | 1 | 2 | 2 | 2 | 2 |
| | | After W-O-M 500 h | 3 | 3 | 3 | 3 | 3 |
| | Pencil hardness | After glossing treatment | - | HB | HB | 3B | B |
| | | After W-O-M 500 h | - | HB | HB | 4B | B |
| | Adhesiveness | After glossing treatment | 0 | 100 | 100 | 12 | 21 |
| | | After W-O-W 500 h | 0 | 100 | 100 | 5 | 6 |

Note that the term "After W-O-M 500 h" designates "after 500 hours of treatment in a Sunshine Weathermeter."

As shown in Table 1, Examples 1-6 were fully provided with gloss on the coating on automobile and on the coating of coated plate, giving favorable appearance of coating thereon and coating of coated plate, and adhesiveness (cohesiveness) of film. Furthermore, it was confirmed that the gloss obtained after glossing treatment sustained over a long period, and that the durability of thus formed film was excellent. In particular, in Examples 1-3, and 6, which used isocyanurate-modified tolylenediisocyanate and hexamethylenediisocyanate, as the isocyanate compound, film was formed within 3 hours even at normal temperature (25 °C). On the other hand, Comparative Example 1 which used a wax-base glossing agent gave insufficient durability, though the gloss was provided. Comparative Example 2 which had the film thickness above 5 µm, and Comparative Example 3 which had the film thickness below 0.1 µm gave insufficient gloss on the coating of automobile and on the coating of coated plate, and the appearance of both the coating of automobile and the coating of coated plate was insufficient. Comparative Examples 4 and 5 which did not use isocyanate compound showed insufficient levels of the coating gloss, the coating appearance, and the film adhesiveness (cohesiveness) for both the coating of automobile and the coating of coated plate.

## Industrial Applicability

The method for glossing solid surface according to the present invention can be used by ordinary processing firms and individual consumers to give gloss to the coating of automobile and the like.

## Claims

1. A method for glossing solid surface by forming a film thereon, comprising the steps of:

preparing a film-forming coating liquid containing at least an isocyanate compound having two or more isocyanate groups, a synthetic resin having a functional group which reacts with the isocyanate groups, and an organic solvent;
coating with the film-forming coating liquid onto the solid surface; and
film-forming on the solid surface after the step of coating,
wherein the coating weight of the film-forming coating liquid being adjusted in the step of coating so as the film thickness after the step of film-forming to become a range from 0.1 to 5 µm.

2. The method for glossing solid surface according to claim 1,

wherein the isocyanate compound is an isocyanurate polyisocyanate compound.

3. The method for glossing solid surface according to claim 1 or 2, wherein the isocyanate compound is a block-type isocyanate compound which is prepared by blocking the isocyanate group by a blocking agent.

4. The method for glossing solid surface in any one of claims 1 to 3, wherein the synthetic resin is at least one resin selected from the group consisting of an acrylic-base resin, a polyester-base resin, an alkyd-base resin, and a polyurethane-base resin.

5. The method for glossing solid surface in any one of claims 1 to 4, wherein the step of film-forming forms a film under a condition between 10 °C and 60 °C of temperatures and within 3 hours.

6. The method for glossing solid surface in any one of claims 1 to 5, wherein the hardness of the film has pencil-hardness in a range from B to 2H determined by hand-scratch method, (determined on the basis of flaws), specified in Section 8.4.2 of JIS K5400.

7. A film-forming coating liquid, wherein the film-forming coating liquid is applied onto solid surface to put gloss thereto, and the liquid comprises:

   a curing agent containing an isocyanate compound having two or more isocyanate groups,
   a major component containing a synthetic resin having a functional group which reacts with the isocyanate groups, and
   an organic solvent.

## INTERNATIONAL SEARCH REPORT

| International application No. |
|---|
| PCT/JP2004/015529 |

**A. CLASSIFICATION OF SUBJECT MATTER**
Int.Cl⁷ B05D5/06, 7/24, C09D175/04

According to International Patent Classification (IPC) or to both national classification and IPC

**B. FIELDS SEARCHED**

Minimum documentation searched (classification system followed by classification symbols)
Int.Cl⁷ B05D5/06, 7/24, C09D175/04

Documentation searched other than minimum documentation to the extent that such documents are included in the fields searched
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-160857 A (Nippon Paint Co., Ltd.),<br>18 June, 1999 (18.06.99),<br>Claims; Par. Nos. [0019] to [0021], [0035],<br>[0049]<br>(Family: none) | 1,2,4,6,7<br>3 |
| X<br>Y | JP 60-255861 A (NOF Corp.),<br>17 December, 1985 (17.12.85),<br>Claims; page 4, lower right column to page 5,<br>upper right column; page 6, upper right column<br>to lower left column; pages 9, 10<br>(Family: none) | 1,2,4-7<br>3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 January, 2005 (06.01.05) | Date of mailing of the international search report<br>25 January, 2005 (25.01.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2004/015529 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 58-112073 A  (Dai Nippon Toryo Co., Ltd.),<br>04 July, 1983 (04.07.83),<br>Claims<br>(Family: none) | 7 |
| X<br>Y | JP 2001-525883 A  (Akzo Nobel NV.),<br>11 December, 2001 (11.12.01),<br>Claims; pages 9, 10<br>& WO 98/053013 A1        & EP 983323 A1 | 7<br>3 |
| X | JP 4-28782 A  (Mitsui Toatsu Chemicals, Inc.),<br>31 January, 1992 (31.01.92),<br>Claims<br>(Family: none) | 7 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9187725 A

- JP 9137128 A

**Non-patent literature cited in the description**

- Auto Chemical. 1991, 165-180